# EUROPÄISCHE PATENTSCHRIFT

(11) **EP 3 781 811 B1**
(45) Veröffentlichungstag und Bekanntmachung des Hinweises auf die Patenterteilung: **23.02.2022**
(21) Anmeldenummer: 19717270.3
(22) Anmeldetag: 08.04.2019
(51) Int. Cl.: F03D 13/10, F03D 13/20

(54) **VERFAHREN ZUM ERRICHTEN EINES WINDENERGIEANLAGEN-TURMS**
METHOD FOR ERECTING A WIND TURBINE TOWER
PROCÉDÉ PERMETTANT D'ÉRIGER UNE TOUR D'ÉOLIENNE

(30) Priorität: 16.04.2018 DE 102018108945
(43) Veröffentlichungstag der Anmeldung: 24.02.2021
(73) Patentinhaber: Wobben Properties GmbH, 26607 Aurich (DE)
(72) Erfinder: FREESE, Ewald, 26489 Ochtersum (DE); STRACKE, Olaf, 26725 Emden (DE)
(74) Vertreter: Eisenführ Speiser
(86) Internationale Anmeldenummer: PCT/EP2019/058788
(87) Internationale Veröffentlichungsnummer: WO 2019/201641

(56) Entgegenhaltungen:
- EP-A1- 2 339 094
- WO-A1-2017/039975
- US-A1- 2005 050 817
- US-A1- 2017 183 872

## Beschreibung

Die vorliegende Erfindung betrifft ein Verfahren zum Errichten eines Windenergieanlagen-Turms.

Bei Spannbetontürmen einer Windenergieanlage wird typischerweise eine Mehrzahl von Turmsegmenten aufeinander platziert. Diese Turmsegmente stellen typischerweise Betonfertigteile dar. Hierbei können mehrere Spannlitzen zu einem Bündel zusammengefasst werden und im Bereich des Fundamentes des Turms verankert werden. Das andere Ende der Spannlitzen ist dann im oberen Bereich eines der Turmsegmente befestigt. Die Spannlitzen sind dabei typischerweise innerhalb der Turmwandung geführt. Dies ist beispielsweise in der US 7,752,825 gezeigt. Eine Verankerung der Spannlitzen im unteren Bereich des Turms der Windenergieanlage kann beispielsweise mittels einer hydraulischen Stempelvorrichtung erfolgen und die Spannlitzen können mittels eines Spannankers befestigt werden.

DE 10 2013 221 432 A1 zeigt einen Übergang zwischen einem Fundament und einem Turm einer Windenergieanlage, wobei Spannlitzen innerhalb einer Turmwandung oder außerhalb einer Turmwandung aber innerhalb des Turms vorgesehen sein können. Das untere Ende der Spannlitzen kann mittels eines Spannankers an einem Teil des Fundaments verspannt werden.

Die Befestigung des oberen Endes der Spannlitzen an dem Turm der Windenergieanlage ist jedoch aufwändig und kompliziert.

In der prioritätsbegründenden deutschen Patentanmeldung hat das Deutsche Patent- und Markenamt die folgenden Dokumente recherchiert: DE 10 2013 221 432 A1, DE 10 2013 225 124 A1, US 7 752 825 B2 und EP 1 262 614 A2.

EP 2 339 094 A1 zeigt ein Verfahren zum Errichten eines Windenergieanlagen-Turms, welcher eine Mehrzahl von Turmsegmenten aufweist, die mittels Spanngliedern verspannt sind.

WO 2017/039975 A1 beschreibt ein System zum Installieren von Spanngliedern in einem Turm einer Windenergieanlage.

US 2017/183872 beschreibt ein Kabelsystem zum vertikalen Vorspannen von Kabeln bei einem Turm bestehend aus einer Mehrzahl von Turmsegmenten.

US 2005/050817 beschreibt ein Verfahren zum Vorspannen eines Spannelementes.

Es ist daher eine Aufgabe der vorliegenden Erfindung, ein Verfahren zum Errichten eines Turms einer Windenergieanlage vorzusehen, welches die oben beschriebenen Nachteile reduziert oder beseitigt. Es ist insbesondere eine Aufgabe der vorliegenden Erfindung, ein Verfahren zum Errichten eines Turms einer Windenergieanlage vorzusehen, welches eine einfachere Montage der Spannlitzen ermöglicht.

Diese Aufgabe wird durch ein Verfahren zum Errichten eines Windenergieanlagen-Turms nach Anspruch 1 gelöst.

Diese Aufgabe wird durch ein Verfahren zum Errichten eines Windenergieanlagen-Turms gelöst, welcher eine Mehrzahl von Turmsegmenten aufweist, welche mittels Spanngliedern verspannt sind. Eine Mehrzahl von Spanngliedern wird vorgesehen und eine Befestigungseinheit wird an einem Ende der Spannglieder befestigt. Das Befestigen der Befestigungseinheit erfolgt durch Platzieren einer mehrteiligen Keileinheit an einem freien Ende der Spannglieder, welche aus einer Mehrzahl von Spannlitzen bestehen. Eine Hülse wird über die Keileinheit aufgesetzt und eine Zuglasche wird auf bzw. an der Hülse befestigt. Die Zuglasche weist eine Öffnung auf. Ein Seil wird an bzw. in dem Loch der Zuglasche befestigt. Das Seil mit der Befestigungseinheit und damit der Spannglieder wird nach oben gezogen. Die Befestigungseinheit wird an einem zu befestigenden Segment des Turms befestigt. Die Hülse wird entfernt, bevor das Spannglied verspannt wird.

Gemäß einem Aspekt der vorliegenden Erfindung wird die Zuglasche von den Hülsen entfernt, bevor die Befestigungseinheit an dem zu befestigenden Segment befestigt wird.

Die Erfindung betrifft insbesondere einen Windenergieanlagen-Turm, welcher eine Au-ßenverspannung aufweist. Damit verlaufen die Spannelemente nicht innerhalb der Turmwandung, sondern außerhalb der Turmwandung aber im Inneren des Turms. Nachdem mindestens zwei Turmsegmente aufeinander und auf dem Fundament platziert worden sind, kann eine Verspannung der beiden Turmsegmente erfolgen. Dazu wird ein oberes Ende des Spanngliedes nach oben gezogen und kann entsprechend befestigt werden. Die Erfindung betrifft insbesondere eine Zuglasche, welche an einem Ende der Spannglieder befestigt wird und mittels welcher die Spannglieder nach oben gezogen werden können. Hierbei wird eine Mehrzahl von Spanngliedern oder Spannlitzen zusammengefasst. Somit wird ein zugfester Anschlagpunkt für das Spannglied vorgesehen. Dazu kann um eine Mehrzahl von Spannlitzen (welche zusammen das Spannglied bilden sollen) ein mehrteiliger Ankerkörper oder ein mehrteiliger Keil vorgesehen sein. Anschließend kann eine Hülse über den mehrteiligen Keil geschoben werden. Die Hülse kann ein Gewinde aufweisen, mittels welchem ein Gegengewinde geschraubt werden kann. In der Hülse kann eine Feder vorgesehen sein, welche die Keile beim Festschrauben unterdrückt. Damit kann ein versehentliches Lösen der Keile verhindert werden. Anschließend kann eine Zuglasche entsprechend befestigt werden. Die Zuglasche wird dann dazu verwendet, ein erstes Ende des Spanngliedes nach oben zu ziehen und entsprechend zu befestigen.

Weitere Ausgestaltungen der Erfindung sind Gegenstand der Unteransprüche.
- Fig. 1: zeigt eine schematische Darstellung einer Windenergieanlage gemäß der Erfindung,
- Fig. 2: zeigt eine schematische Schnittansicht eines Übergangs zwischen einem Fundament und einem Turm einer Windenergieanlage,
- Fig. 3: zeigt eine schematische Schnittansicht eines Turms einer Windenergieanlage während der Errichtung des Turms,
- Fig. 4: zeigt eine schematische Schnittansicht eines errichteten Turms einer Windenergieanlage,
- Fig. 5A bis 5D: zeigen jeweils eine perspektivische und schematische Ansicht einer Montage einer Befestigungseinheit für ein Spannglied gemäß einem Ausführungsbeispiel der Erfindung,
- Fig. 6A bis 6E: zeigen verschiedene Ansichten einer Befestigungseinheit für ein Spannglied gemäß einem zweiten Ausführungsbeispiel der Erfindung,
- Fig. 7A bis 7D: zeigen verschiedene Ansichten einer Zuglasche der Befestigungseinheit für Spannlitzen,
- Fig. 8A bis 8C: zeigen verschiedene Ansichten von Keilen für die Befestigungseinheit, und
- Fig. 9A und 9B: zeigen verschiedene Ansichten einer Hülse für die Befestigungsein- heit gemäß dem ersten und zweiten Ausführungsbeispiel.

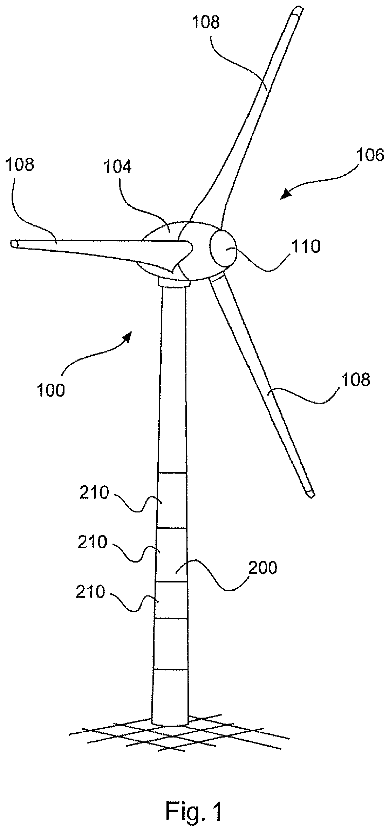

Fig. 1 zeigt eine schematische Darstellung einer Windenergieanlage gemäß der Erfindung. Die erfindungsgemäße Windenergieanlage 100 weist einen Turm 200 bestehend aus mehreren Turmsegmenten 210, eine Gondel 104, einen aerodynamischen Rotor 106 mit einem Spinner 110 sowie drei Rotorblätter 108 auf. Der aerodynamische Rotor 106 ist mit einem Rotor eines (nicht gezeigten) elektrischen Generators verbunden, so dass beim Drehen des aerodynamischen Rotors 106 der elektrische Generator Energie erzeugt.

Die Segmente 210 des Turms 200 stellen vorzugsweise Betonfertigteile dar. Alternativ dazu können die Turmsegmente 210 auch Stahlsegmente darstellen.

Der erfindungsgemäße Turm ist ein mittels Spanngliedern verspannter Windenergieanlagen-Turm.

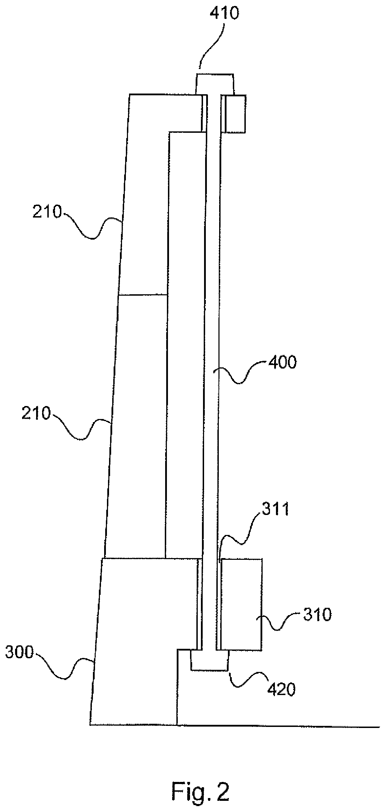

Fig. 2 zeigt eine schematische Schnittansicht eines Übergangs zwischen einem Fundament und einem Turm einer Windenergieanlage. In Fig. 2 ist insbesondere der Übergang zwischen einem Fundament 300 und einem unteren Bereich des Turms 200 mit den Turmsegmenten 210 dargestellt. Das Fundament 300 kann eine Anguss 310 mit einer Mehrzahl von Durchgangsbohrungen 311 aufweisen. Die Spannglieder 400 werden durch die Durchgangsbohrungen 311 geführt und am oberen Ende mittels eines Spannankers 410 befestigt. Am unteren Ende kann ebenfalls ein Spannanker 420 vorgesehen sein. Die Spannglieder 400 können jeweils eine Mehrzahl von Spannlitzen aufweisen, welche zu einem Spannglied zusammengefasst sind.

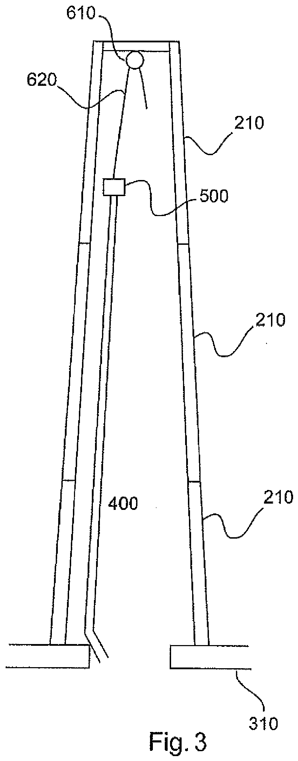

Fig. 3 zeigt eine schematische Schnittansicht eines Turms einer Windenergieanlage während der Errichtung des Turms. Gemäß einem Aspekt der vorliegenden Erfindung kann ein oberes Ende eines Spanngliedes 400 mittels einer Befestigungseinheit 500 und mittels einer Umlenkeinheit 600 nach oben gezogen werden. Dazu kann ein Seil 620 an der Befestigungseinheit 500 befestigt werden und das Seil 620 kann mittels eines Rollensystems 610 nach oben gezogen werden.

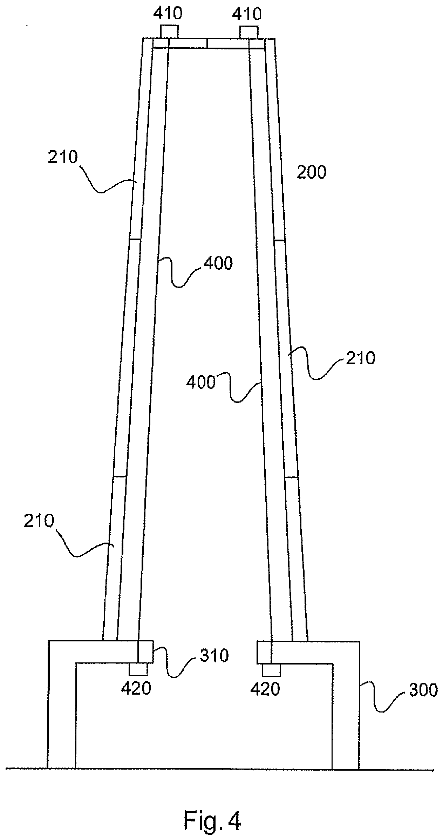

Fig. 4 zeigt eine schematische Schnittansicht eines errichteten Turms einer Windenergieanlage. Wie in Fig. 4 gezeigt, sind die Spannglieder 400 am oberen und unteren Ende jeweils mit einem Spannanker 410, 420 verspannt, so dass ein verspannter Turm 200 erreicht wird.

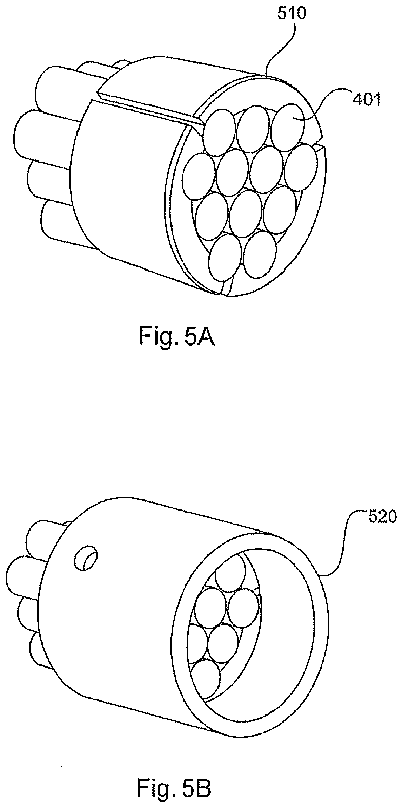

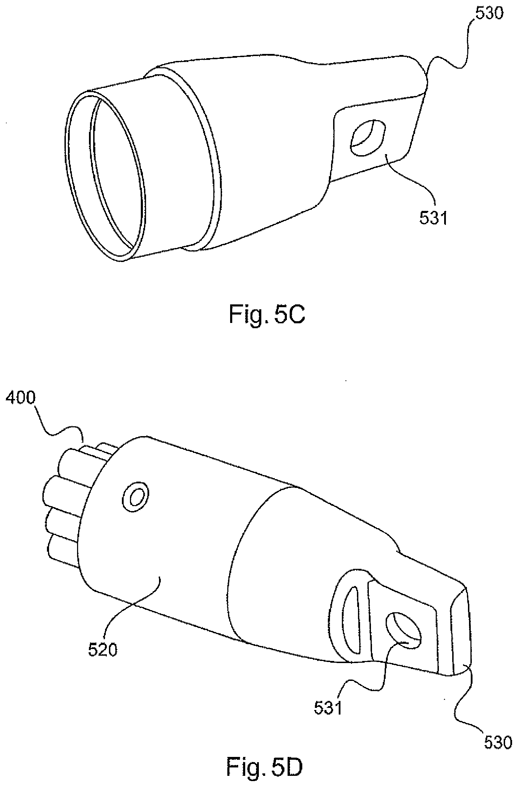

Fig. 5A bis 5D zeigen jeweils eine perspektivische und schematische Ansicht einer Montage einer Befestigungseinheit für ein Spannglied gemäß einem Ausführungsbeispiel der Erfindung. Ein mehrteiliger Keil 510 wird um ein erstes Ende der Spannlitzen 401 herum gelegt. Anschließend kann eine Hülse 520 über die Keile 510 platziert werden. Dann kann eine Zuglasche 530 über der Hülse 520 platziert werden. Beispielsweise kann die Zuglasche 530 auf ein Gewinde an der Hülse 520 aufgeschraubt werden. Die Zuglasche 530 kann ein Loch 531 aufweisen, an welchem ein freies Ende des Seils 620 befestigt werden kann, um das Spannglied mittels der Befestigungseinheit 500 nach oben zu ziehen.

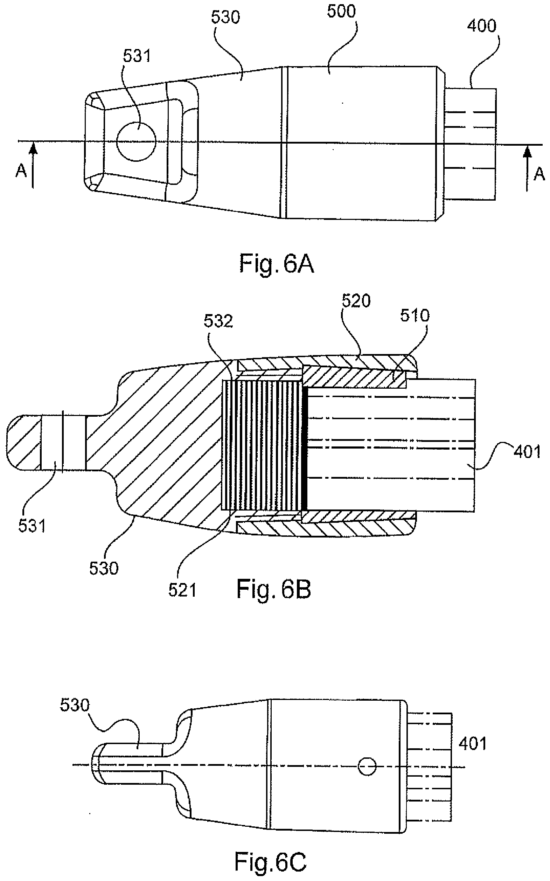

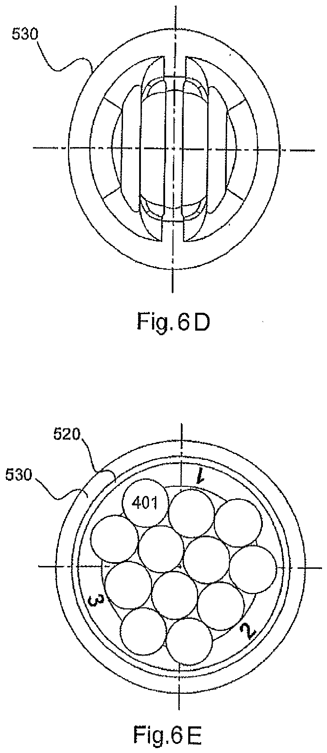

Fig. 6A bis 6E zeigen verschiedene Ansichten einer Befestigungseinheit für ein Spannglied gemäß einem zweiten Ausführungsbeispiel der Erfindung. Fig. 6A zeigt eine Draufsicht auf eine Befestigungseinheit 500, welche ein freies Ende des Spanngliedes 400 aufnimmt. Fig. 6B zeigt eine Schnittansicht entlang der Achse A-A aus Fig. 6A. Fig. 6C zeigt eine weitere Draufsicht auf die Befestigungseinheit 500. Fig. 6C zeigt eine weitere Ansicht und Fig. 6E zeigt eine schematische Schnittansicht der Befestigungseinheit.

Insbesondere in Fig. 6B ist die Befestigungseinheit 500 mit mehreren Details zu sehen. Über den Enden der Spannlitzen 410 ist ein mehrteiliger Keil 510 platziert. Über dem Keil 510 ist eine Hülse 520 vorgesehen. Die Hülse 520 weist ein Gewinde (Innengewinde oder Außengewinde 521) auf. Die Zuglasche 530 weist ebenfalls ein Gewinde 532 auf, welches mit dem Gewinde 521 der Hülse zusammenwirkt, so dass die Zuglasche auf die Hülse geschraubt werden kann.

Wenn der mehrteilige Keil in Form einer mehrteiligen Feder 510 über das freie Ende der Spannlitzen geschoben wird und wenn die Hülse 520 darüber platziert wird, dann sind die Keile 510 verkeilt, so dass die Spannlitzen 401 nicht herausfallen können.

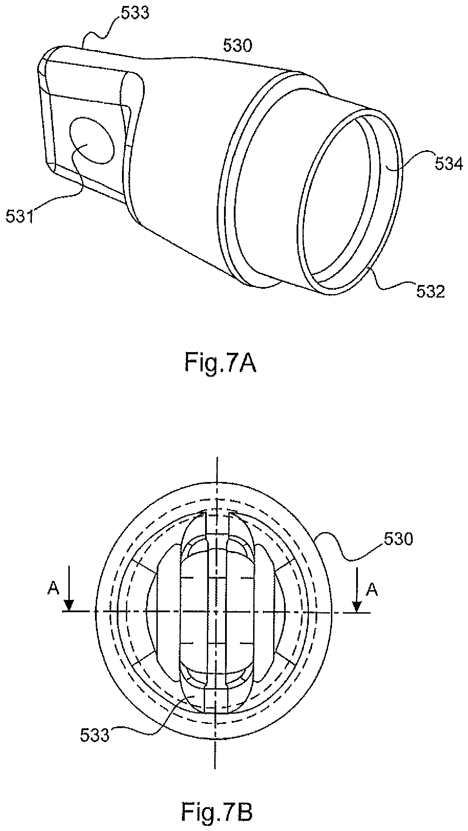

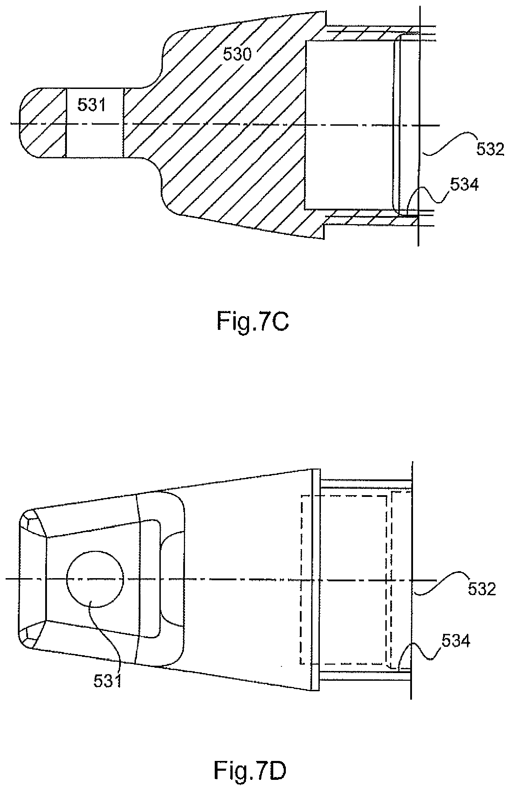

Fig. 7A bis 7D zeigen verschiedene Ansichten einer Zuglasche der Befestigungseinheit für Spannlitzen. Fig. 7A zeigt eine perspektivische Ansicht der Zuglasche, Fig. 7B zeigt eine Seitenansicht der Zuglasche, Fig. 7C zeigt eine Schnittansicht der Zuglasche und Fig. 7D zeigt eine weitere Seitenansicht der Zuglasche. Die Zuglasche 530 weist ein erstes Ende 533 mit einer Öffnung 531 sowie ein zweites Ende 532 mit einem Gewinde 534 auf. Das zweite Ende 532 kann über einen geringeren Außendurchmesser als ein mittlerer Abschnitt der Zuglasche 530 verfügen. Das Gewinde 534 ist vorzugsweise an ein Gewinde an der Hülse 520 angepasst, so dass die Zuglasche auf die Hülse geschraubt werden kann.

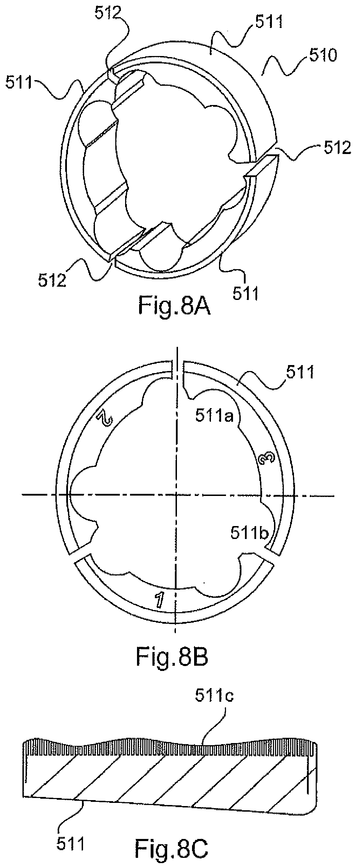

Fig. 8A bis 8C zeigen verschiedene Ansichten von Keilen für die Befestigungseinheit. Fig. 8A zeigt eine perspektivische Ansicht der Keileinheit, Fig. 8B zeigt eine Draufsicht der Keileinheit und Fig. 8C zeigt eine Schnittansicht der Keileinheit. Die Keileinheit 510 besteht aus drei Keilabschnitten 511, welche eine äußere zylinderförmige Fläche aufweisen. An der Innenseite der Keile 511 sind vorzugsweise zwei Ausnehmungen 511a, 511b vorgesehen. Diese Ausnehmungen 511a, 511b dienen dazu, einen Teil der Litzen 410 wie beispielsweise in Fig. 5A gezeigt aufzunehmen.

Die Innenseite der Keile weist entlang der Längsrichtung der Keile eine Mehrzahl von Querriefen 511c auf. Diese Querriefen sind spitz ausgestaltet und sollen dazu dienen, einen verbesserten Halt der Spannlitzen in den Keilen vorzusehen.

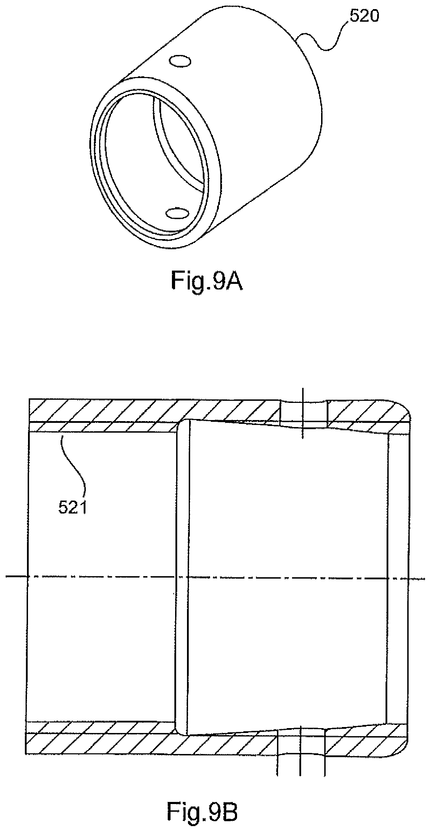

Fig. 9A und 9B zeigen verschiedene Ansichten einer Hülse für die Befestigungseinheit gemäß dem ersten und zweiten Ausführungsbeispiel. Die Hülse 520 weist an ihrem einen Ende ein Gewinde 521 auf. Dieses Gewinde 521 kann mit dem Gewinde 534 der Zuglasche 530 zusammenwirken, um die Zuglasche 530 auf die Hülse 520 zu schrauben.

Somit kann eine abnehmbare Befestigung der Zuglasche 530 an der Hülse 520 vorgesehen sein. Dies ist vorteilhaft, weil damit die Zuglasche 530 wiederverwendet werden kann, wenn das Spannglied 400 montiert worden ist und der Turm mit den Turmsegmenten 210 vorgespannt worden ist.

## Patentansprüche

1. Verfahren zum Errichten eines Windenergieanlagen-Turms (200), welcher eine Mehrzahl von Turmsegmenten (210) aufweist, welche mittels Spanngliedern (400) verspannt sind, mit den Schritten:
Vorsehen einer Mehrzahl von Spanngliedern (400),
Befestigen einer Befestigungseinheit (500) an einem Ende der Spannglieder (400), wobei das Befestigen der Befestigungseinheit (500) folgende Schritte aufweist:
Platzieren einer mehrteiligen Keileinheit (510) an einem freien Ende der Spannglieder (400), welche aus einer Mehrzahl von Spannlitzen (401) bestehen,
Aufsetzen einer Hülse (520) über die Keileinheit (510) und
Befestigen einer Zuglasche (530) auf bzw. an der Hülse (520),
wobei die Zuglasche (530) eine Öffnung (531) aufweist,
Befestigen eines Seils (620) an dem Loch (531) der Zuglasche (530),
Hochziehen des Seils (620) mit der Befestigungseinheit (500) und damit des Spanngliedes (400) nach oben, und
Befestigen der Befestigungseinheit (500) an einem zu befestigenden Segment (210) des Turms,
wobei die Hülse (520) entfernt wird, bevor das Spannglied (400) verspannt wird.

2. Verfahren nach Anspruch 1, wobei
die Zuglasche (530) von den Hülsen (420) entfernt werden bevor die Befestigungseinheit (500) an dem zu befestigenden Segment (210) befestigt wird.

## Claims

1. A method of erecting a wind turbine tower (200) having a plurality of tower segments (210) which are tensioned by means of tensioning members (400), comprising the steps:
providing a plurality of tensioning members (400),
fixing a fixing unit (500) at an end of the tensioning members (400), wherein fixing of the fixing unit (500) includes the following steps:
placing a multi-part wedge unit (510) at a free end of the tensioning members (400) which comprise a plurality of tensioning wires (401),
fitting a sleeve (520) over the wedge unit (510), and
fixing a pulling tab (530) on or at the sleeve (520),
wherein the pulling tab (530) has an opening (531),
fixing a cable (620) at the hole (531) in the pulling tab (530),
pulling up the cable (620) with the fixing unit (500) and thus the tensioning member (400) upwardly, and
fixing the fixing unit (500) to a segment (210) of the tower, that is to be fixed,
wherein the sleeve (520) is removed before the tensioning member (400) is braced.

2. A method as set forth in claim 1 wherein
the pulling tab (530) is removed from the sleeves (420) before the fixing unit (500) is fixed to the segment (210) to be fixed.

## Revendications

1. Procédé pour ériger une tour d'éolienne (200), laquelle présente une multitude de segments de tour (210), lesquels sont serrés au moyen d'organes de serrage (400), avec les étapes :
de prévision d'une multitude d'organes de serrage (400),
de fixation d'une unité de fixation (500) sur une extrémité des organes de serrage (400),
dans lequel la fixation de l'unité de fixation (500) présente des étapes suivantes :
le placement d'une unité de calage (510) en plusieurs parties sur une extrémité libre des organes de serrage (400), lesquels sont constitués d'une multitude de torons de serrage (401),
le placement d'une douille (520) par-dessus l'unité de calage (510), et
la fixation d'une bride de traction (530) sur ou contre la douille (520),
dans lequel la bride de traction (530) présente une ouverture (531),
de fixation d'un câble (620) sur le trou (531) de la bride de fixation (530),
de tirage vers le haut du câble (620) avec l'unité de fixation (500) et ainsi de l'organe de serrage (400), et
de fixation de l'unité de fixation (500) sur un segment (210) à fixer de la tour,
dans lequel la douille (520) est retirée avant que l'organe de serrage (400) ne soit serré.

2. Procédé selon la revendication 1, dans lequel
la bride de traction (530) est retirée des douilles (420) avant que l'unité de fixation (500) ne soit fixée sur le segment (210) à fixer.
